# EUROPÄISCHE PATENTSCHRIFT

(11) **EP 2 181 167 B1**
(45) Veröffentlichungstag und Bekanntmachung des Hinweises auf die Patenterteilung: **28.11.2012**
(21) Anmeldenummer: 08787176.0
(22) Anmeldetag: 13.08.2008
(51) Int. Cl.: C09D 183/02, C03C 17/00, C03C 17/25

(54) **MIT EINER STAUB- UND AEROSOLABWEISENDEN BESCHICHTUNG VERSEHENE SUBSTRATE, VERFAHREN ZUR HERSTELLUNG DERSELBEN UND MATERIALIEN DAFÜR**
SUBSTRATES SUPPLIED WITH A DUST AND AEROSOL-REPELLENT COATING, METHOD FOR THE PRODUCTION THEREOF AND MATERIALS FOR THIS PURPOSE
SUBSTRATS POURVUS D'UN REVÊTEMENT REPOUSSANT LA POUSSIÈRE ET LES AÉROSOLS, PROCÉDÉ POUR LES PRODUIRE ET MATÉRIAUX APPROPRIÉS

(30) Priorität: 20.08.2007 DE 102007039164
(43) Veröffentlichungstag der Anmeldung: 05.05.2010
(73) Patentinhaber: Fraunhofer-Gesellschaft zur Förderung der angewandten Forschung e.V., 80686 München (DE)
(72) Erfinder: GLAUBITT, Walther, 97276 Margetshoechheim (DE); GRAF, Wolfgang, 79427 Eschbach (DE); GOMBERT, Andreas, 79100 Freiburg (DE)
(74) Vertreter: Olgemöller, Luitgard Maria
(86) Internationale Anmeldenummer: PCT/EP2008/060625
(87) Internationale Veröffentlichungsnummer: WO 2009/024511

(56) Entgegenhaltungen:
- WO-A-03/027015
- WO-A-03/027034
- GLAUBITT W ET AL: "HIGH TRANSMISSION FLOAT GLASS FOR SOLAR APPLICATIONS" GLASS SCIENCE AND TECHNOLOGY, DEUTSCHE GLASTECHNISCHE GESELLSCHAFT, OFFENBACH, DE, Bd. 73, Nr. 6, 1. Juni 2000 (2000-06-01), Seiten 193-195, XP000936294 ISSN: 0946-7475

## Beschreibung

Die vorliegende Erfindung betrifft eine Substratbeschichtung, die Staub abweist und leicht mit Regenwasser von anhaftendem anorganischem und organischem Schmutz gereinigt werden kann. Die Beschichtung verleiht Glas in den bevorzugten Ausgestaltungen zusätzlich eine antireflektierende Eigenschaft und eignet sich daher besonders zur Beschichtung von Glas, das in Anlagen zur solaren Energienutzung verwendet wird, beispielsweise Flachglas zum Abdecken von Photovoltaikmodulen und Warmwasserkollektoren oder Rohrglas für solare Warmwasserbereitung, aber ggf. auch von Baugläsern oder dgl.. Zur Herstellung der Beschichtung wird das zu beschichtende Substrat in eine Beschichtungslösung getaucht und dann mit angepasster Geschwindigkeit aus der Lösung herausgezogen. Der auf der Glasoberfläche verbliebene Nassfilm wird getrocknet und abschließend bei Bedarf zur Erhöhung der Abriebfestigkeit mit mehreren hundert Grad, z.B. 500°C eingebrannt. Das technische Gerät oder sonstige Substrat, ausgerüstet mit einem in solcher Art veredeltem Glas, eignet sich vor allem für geographische Regionen, in denen viel Staub in der Atmosphäre vorkommt und dadurch die Energieausbeute durch eine verstaubte Einstrahlfläche reduziert wird.

Bestandteile unserer Atmosphäre reichen von den sehr kleinen Gasmolekülen mit Durchmessern unter einem Nanometer bis hin zu 100 µm großen Aschepartikeln. Die Gruppe der Aerosole sind feste oder flüssige Partikel in der Luft mit einer typischen Größe zwischen 0,01 und 10µm sowie - im Gegensatz zu den Treibhausgasen - einer sehr kurzen Lebensdauer von wenigen Tagen. Aerosole können natürlichen und/oder anthropogenen Ursprungs sein (Seesalz, Mineralstaub, Sulfat, Ruß usw.). Die für die effektive Anwendung solarer Anlagen nachteiligen partikelförmigen Stoffe sind vor allem in Wasser schlecht lösliche Stäube mit anorganischen und organischen Komponenten oder Ruß bzw. Rauch, die vorwiegend aus Kohlenstoff bestehen. Die kleinsten dieser Aerosole haben einen Durchmesser von 10 nm (Ultrafeinstaub), der nicht sedimentiert, wohl aber als viel größeres Koagulat um 100 nm durch Niederschlag ausgeschieden wird. Sedimentationsstaub weist Durchmesser im Mikrometerbereich, definitionsgemäß von mehr als 10 µm auf.

Lagern sich Aerosole auf der Glasoberfläche ab, verringert sich die Transmission. Besonders schädlich sind dabei Partikel, die sich als Schmutzschicht dauerhaft auf dem Glas ansammeln und weder durch Regen oder Wind entfernt werden können und eine mechanische betriebene Reinigung (z.B. mit Schwamm und Bürste) erfordern.

Untersuchungen an verschmutzen Glasoberflächen eines Kollektors haben ergeben, dass auf einer gut haftenden, schmierigen Grundschicht eine staubige Deckschicht liegt. Die staubige Deckschicht lässt sich noch durch Regentropfen entfernen, die Grundschicht nicht. Es ist besonders diese dauerhaft wirkende Verschmutzung, die die effektive Verwendung solarer Anlagen beeinträchtigt.

An verschmutzten Glasrohren wurde die chemische Zusammensetzung der Oberfläche mit TOF-SIMS-Verfahren (Flugzeit-Sekundärionen-Massenspektrometrie; time-of-flight-SIMS) analysiert. In hoher Intensität ist Na, K, Mg, Ca, Fe, Al, Si und Pb gefunden worden. Neben Cl und NOx, die wasserlösliche Verbindungen bilden, wurde auch F und SOx nachgewiesen, die beide auch schwerlöslich sein können, wenn sie als MgF₂, CaF₂ oder Gips vorliegen. Außerdem sind organische Verbindungen, darunter höhere Fettsäuren vorhanden, die ebenfalls schwerlöslich sind und die schmierige, ölige Konsistenz der peramanten Grundschicht erklären können.

Wie bereits in der DE 103 51 467 A1 erläutert, ist es bekannt, Gegenstände zur Vermeidung von Schmutzablagerungen entweder mit hydrophoben Lösungen oder mit hydrophilen, photokatalytischen Schichten zu versehen. Hydrophobe Oberflächen können auf unterschiedliche Weise erzeugt werden. Zum einen kann, wie in der Keramikindustrie üblich, eine aus einem anorganisch-organischen Nanopartikelnetzwerk bestehende Schicht über ungesättigte organische Gruppen thermisch oder mit UV-Licht vernetzt werden. Typische Beispiele sind die anorganisch-organischen Hybridpolymere, die unter der Marke ORMOCERe® des Fraunhofer Instituts für Silicatforschung bekannt sind. Zum anderen gibt es eine Vielzahl von hydrophoben, organischen Lösungen, die nach der Fertigung oder auch vom Endkunden appliziert werden können (z.B. Lösungen, die unter der Marke "Clear Shield^{™}" bekannt geworden sind). Die WO 00/37374 zeigt ein Beispiel für diesen Lösungsansatz. Die in dieser Druckschrift beschriebenen Beschichtungen sind jedoch mechanisch nicht sehr beständig und sind auch durch die organischen Komponenten hinsichtlich der maximalen Einsatztemperatur begrenzt. Weiterhin werden Fassadengläser mit leicht reinigbaren, hydrophilen, photokatalytischen Schichten angeboten. Um eine Reinigungswirkung zu erzielen, ist dabei allerdings eine Aktivierung durch UV-Licht zwingend nötig. Außerdem ist die Abbaurate sehr niedrig und nicht für Kontaktverschmutzungen geeignet.

Aus der WO 03/027015 A1 ist ein Hybrid-Sol bekannt, welches neben Wasser und Lösemittel zwei unterschiedliche Fraktionen von [SiOₓ(OH)_{y}]-Partikeln mit 0<y<4 und 0<x<2 enthält, wobei die erste Fraktion eine Teilchengröße von 4-15 nm und die zweite Fraktion eine mittlere Teilchengröße von 20-60 nm aufweist. Das Sol ist erhältlich durch hydrolytische Polykondensation von Tetraalkoxysilanen in einem wässrigen, Lösemittel enthaltenden Medium, wobei Siliciumoxid-hydroxid-Partkel erhalten werden. Dem Medium wird ein monodisperses Siliziumoxid-hydroxid-Sol mit einer mittleren Teilchengröße von 20-60 nm zugesetzt, wenn die hydrolytische Kondensation der Silane zumindest teilweise erfolgt ist. Das Hybrid-Sol eignet sich zur Herstellung von abriebfesten SiO₂-Antireflexschichten auf Substraten, vorzugsweise auf Glas, die besonders für Abdeckungen von Sonnenkollektoren und photovoltaischen Zellen geeignet sind. Die WO 03/027034 A2 beschreibt aus solchen Solen hergestellte Antireflex-Oberflächenbeschichtungen mit einem Verhältnis von Partikeln der ersten Fraktion zu denen der zweiten Fraktion im Bereich von 3000:1 bis 250:1. Inwieweit diese Beschichtungen staub- oder aerosolabweisend sein könnten, wird in den genannten Druckschriften nicht erwähnt; nach Aussage derjenigen Erfinder der vorliegenden Anmeldung, die auch Erfinder der in der genannten WO-Schrift beschriebenen Schichten sind, wurden in Feldversuchen keine signifikanten Unterschiede hinsichtlich der Staubablagerung zwischen unbeschichtetem und beschichtetem Glas gefunden.

Es ist Aufgabe der Erfindung, ein Beschichtungsmaterial aufzufinden, das nach Aufbringen auf ein Glas-Substrat oder eine andere Oberfläche eine Schicht ergibt, deren Oberfläche leichter zu reinigen ist als bei aus dem Stand der Technik bekannten Beschichtungen, auch wenn diese einer starken Verschmutzung durch kleine und allerkleinste atmosphärische Partikel ausgesetzt sind, wobei die letztendlich entstehende Schicht vorzugsweise eine hohe Transparenz aufweisen sollte.

Überraschend konnte die Aufgabe durch die Bereitstellung eines Beschichtungsmaterials gelöst werden, enthaltend
(a) durch hydrolytische Kondensation gebildete oxidische Teilchen in einem Größenbereich von 5-20 nm,
(b) Teilchen in einem Größenbereich von 80-300 nm, die vorzugsweise, aber nicht notwendig, ebenfalls oxidische Teilchen sind,
(c) ein erstes, wasserhaltiges Lösungsmittel, in welchem das Ausgangsmaterial für die durch hydrolytische Kondensation zu bildenden oxidischen Teilchen löslich ist und welches dessen Hydrolyse und Kondensation zulässt oder fördert, und
(d) ein zweites Lösungsmittel, ausgewählt unter Alkoholen, Ethern, organischen Säuren, Estern, Ketonen, Aminen und Säureamiden der Formeln

   ROH

   ROR¹,

   RCOOH

   RCOOR¹

   RC(O)R¹,

   RCONR²₂,

   worin R und R¹ ggf. gleich oder verschieden sind und unsubstituiertes oder mit Hydroxy, -NHR², Amido, Imino, -COOR², und/oder Alkoxycarbonyl substituiertes, gesättigtes oder ungesättigtes, geradkettiges oder verzweigtes Alkyl, Alkoxy oder Polyetheralkoxy mit vorzugsweise 1, 2 oder 3 Alkylenoxideinheiten und vorzugsweise insgesamt 1 bis 10 Kohlenstoffatomen bedeutet, oder worin R und R¹ unter Ausbildung einer unsubstituierten oder mit Hydroxy, -NHR², Amido, Imino, -COOR², und/oder Alkoxycarbonyl substituierten oder ungesättigten, geradkettigen oder verzweigten Alkylen-, Oxyalkylen- oder Alkylen(poly)oxyalkylengruppe unter Ringbildung miteinander verknüpft sind, mit der Maßgabe, dass R kein unsubstituiertes Alkyl ist, wenn das Lösungsmittel unter die Formel ROH fällt, und worin R² gleich oder ggf.
   verschieden sein kann und H oder C₁ bis C₆-Alkyl bedeutet, und das eine Komplexierung oder Chelatisierung des Ausgangsmaterials für die hydrolytische Kondensation der oben erwähnten, kleineren oxidischen Teilchen bewirken und/oder eine leichte bis mäßige Solvatisierung und/oder Peptisierung der Ausgangsmaterialien bzw. der sich bildenden Teilchen bewirken oder unterstützen kann.

Die durch hydrolytische Kondensation erhaltenen oxidischen Teilchen in einem Größenbereich von 5-20 nm können auf bekannte Weise mit Hilfe der Sol-Gel-Technik erzeugt werden. So beschreibt die WO 03/027015 A1 die Herstellung solcher Teilchen durch hydrolytische Polykondensation eines Tetraalkoxysilans in einem basischen, wässrigen, einen Alkohol enthaltenden Lösungsmittel. Allerdings ist die vorliegende Erfindung nicht auf diese Herstellungsweise und/oder auf reine Siliciumdioxide beschränkt. Denn es eignen sich beliebige oxidische Teilchen für die Zwecke der Erfindung, unabhängig von den verwendeten Kationen. So können Metalloxide aus beliebigen Silantetra- oder -trialkoxiden, die im letzteren Fall einen weiteren, z.B. über Kohlenstoff gebundenen Rest enthalten, oder aus sonstigen hydrolysierbaren und kondensierbaren Silanen erhalten werden. Statt dessen oder in Kombination damit können Verbindungen, vor allem Hydroxide oder Alkoxide, von zwei-, drei-, vier- oder fünfwertigen Ionen der Hauptgruppen des Periodensystems und der Übergangsmetalle eingesetzt werden, die sich durch Hydrolyse und Kondensation unter Ausbildung von Metall-Sauerstoff-Bindungen in Oxide überführen lassen, z.B. hydrolysierbaren Metallverbindungen des Magnesiums, des Calciums, von Bor, Aluminium, Germanium, Zinn, Titan oder Zirkonium oder einer Mischung davon. Die (formal) in drei- und/oder vierwertigem Zustand befindlichen (Halb-)Metall-lonen sind hierbei bevorzugt. In jedem Falle sind dabei jeweils die Hydroxide und Alkoxide als Ausgangsmaterialien bevorzugt, insbesondere geradkettige oder verzweigte oder cyclische C₁-C₁₀-Alkoxide.

Die größeren oxidischen Teilchen können beliebige Teilchen sein, z.B. Teilchen eines Kieselsols. Stattdessen können auch Oxide anderer und insbesondere der oben für die kleiner dimensionierten Teilchen genannten Metalle oder Halbmetalle eingesetzt werden, oder die Teilchen können aus Titandioxid bestehen oder dieses in Mischung oder als Mischoxid mit einem oder mehreren anderen Metallkationen enthalten. Weitere Alternativen sind Teilchen aus einem bei Raumtemperatur wasserunlöslichen bzw. sehr schlecht löslichen, nicht-oxidischen Material, beispielsweise MgF₂, oder Teilchen mit einem im Innern beliebigen Material, deren Außen "haut" (d.h. der äußerste, mindestens ca. 4-10 nm dicke Bereich) aus einem der vorgenannten oxidischen Materialien oder MgF₂ besteht. Vorzugsweise liegen diese Teilchen in einer relativ engen oder sogar sehr engen Größenverteilung vor, oder sie sind sogar monodispers (z.B. mit einer Größenverteilung, deren Maximum zwischen 100 und 280 nm, vorzugsweise zwischen 100 und 150 nm liegt und bei der rund 80% der Teilchen im Bereich einer Durchmesserabweichung von bis zu 20 nm nach unten und nach oben liegen, oder monodisperse Teilchen mit einem Durchmesser von zwischen etwa 100 nm und etwa 250 nm, z.B. bei etwa 120 nm).

Beispiele für das erste, unter (c) genannte Lösungsmittel sind wässrige, die hydrolytische Kondensation der oben erwähnten Ausgangsmaterialien unterstützende oder katalysierende, ggf. alkoholhaltige, vorzugsweise basische Lösungsmittel, die als Base beispielsweise Ammoniak, ein Amin, Polyethylenimin oder dgl. enthalten können. Als Alkohole dienen beispielsweise Methanol, Ethanol, i- oder n-Propanol oder n-, i- oder t-Butanol. Die Gegenwart von Alkohol ist jedoch nicht zwingend erforderlich.

Das zweite Lösungsmittel kann ausgewählt sein unter Alkoxyalkoholen wie Methoxypropanol, Methoxyethanol oder Methoxymethanol, Polyalkoxyalkoholen (Polyetheralkoholen) mit vorzugsweise 2 oder 3 Alkylenoxideinheiten (z.B. CH₃CH₂-O-CH₂CH₂-O-CH₂CH₂OH), bevorzugt niederen, symmetrischen oder unsymmetrischen Ketonen wie Aceton oder Methylisobutylketon, bevorzugt niederen, symmetrischen oder unsymmetrischen Ethern wie Diethylether oder Dibutylether oder Tetrahydrofuran, Estern wie Essigsäureethylester oder (Poly-) Alkoxy-Carbonsäuren wie CH₃-O-CH₂-O-CH₂CO₂H oder Alkoholen oder Polyolen mit Carboxygruppen.

Außerdem stellt die Erfindung in Lösung der genannten Aufgabe ein mit einer Beschichtung versehenes Substrat bereit, wobei die Beschichtung aus mindestens zwei Partikel-Fraktionen aufgebaut ist, wobei die erste Fraktion oxidische Teilchen in einem Größenbereich von 5-20 nm aufweist oder aus diesen Teilchen besteht und die zweite Fraktion Teilchen in einem Größenbereich von 80-300 nm, vorzugsweise von 100 nm bis 300 nm und stärker bevorzugt von 100 bis 200 nm aufweist, die einen durchschnittlichen Abstand, von Kegel zu Kegel dieser Teilchen gemessen, von etwa 20-200 nm zueinander haben, wobei die Partikel der ersten Fraktionen Poren mit einer Porenradiusverteilung aufweisen, deren Maximum zwischen 1 und 6 nm liegt.

Die oxidischen Teilchen der ersten Fraktion können beliebig zusammengesetzt sein; bevorzugt bestehen sie ganz oder überwiegend aus ggf. organisch modifiziertem Siliciumdioxid oder einem Mischoxid von Silicium mit einem oder mehreren Kationen der Hauptgruppe oder der Übergangsmetalle, vorzugsweise mit einer formalen Oxidationsstufe von +2, +3, +4 oder +5. Vorzugsweise kann es sich bei den Oxiden um solche des Magnesiums, des Calciums, von Bor, Aluminium, Germanium, Zinn, Titan oder Zirkonium oder um Mischungen oder Mischoxide davon handeln.

Die Teilchen der zweiten Fraktion können dieselbe oder eine andere Zusammensetzung haben wie die Teilchen der ersten Fraktion; auch diese können aus Siliciumdioxid oder einem Mischoxid von Silicium mit einem oder mehreren Kationen der Hauptgruppe oder der Übergangsmetalle, vorzugsweise mit einer formalen Oxidationsstufe von +2, +3, +4 oder +5, oder aus einem oder mehreren Oxiden des Magnesiums, des Calciums, von Bor, Aluminium, Germanium, Zinn, Titan oder Zirkonium oder aus Mischungen oder Mischoxiden davon bestehen. Die Teilchen können damit aus einem reinen oder gemischten Oxid bestehen, beispielsweise Al₂O₃, SiO₂ oder TiO₂, die aus entsprechenden Agglomeraten oder Solen, beispielsweise Kieselsolen, gewonnen wurden. Alternativ können die Teilchen der zweiten Fraktion, wie oben für das Beschichtungsmaterial erwähnt, aus einem anderen, zumindest bei Raumtemperatur sehr schlecht oder gar nicht in Wasser löslichen Material bestehen, oder sie können aus einem Kern aus einem beliebigen Material und einer Außenhaut oder -schale aus einem der vorgenannten Materialien bestehen.

Durch die Herstellung der ersten Teilchen mit Hilfe der Sol-Gel-Technik unter Verwendung der erfindungsgemäß einsetzbaren Lösungsmittel weisen diese Teilchen Porendurchmesser mit einem Maximum im Bereich von unter 6 nm auf. Stärker bevorzugt liegt das Maximum der Porenverteilung bei ca. 1,5-4 nm. Auch die größeren Teilchen können solche Poren besitzen; derartige poröse Teilchen sind im Handel erhältlich. Ob die größeren Teilchen per se auf ihrer Oberfläche Poren besitzen oder nicht, ist jedoch für die Verwirklichung der Erfindung unkritisch, weil sie von den ersten, kleineren Teilchen eingehüllt sind, so dass ihre äußerste Oberfläche oder aber die Hülle, in die sie eingebettet sind, in jedem Fall Poren aufweist.

Die kleineren Teilchen besitzen aufgrund ihrer Herstellung in der Regel eine irreguläre Form, sind also nicht sphärisch oder annähernd sphärisch geformt. Die größeren Teilchen sind dagegen vorzugsweise sphärisch (globulär) oder annähernd sphärisch. Unter "annähernd sphärisch" sind dabei auch Ellipsoide oder eiförmige Gebilde zu verstehen oder solche, die kleinere irreguläre Strukturen auf ihrer Oberfläche aufweisen, sofern ihr Körper eine sphärische Grundform aufweist.

Das Gewichts- bzw. Massenverhältnis der kleineren Teilchen im Verhältnis zu den größeren Teilchen liegt vorzugsweise etwa bei 25:1 bis 1:5, stärker bevorzugt bei 5:1 bis 1:1 und ganz besonders bevorzugt bei etwa 1,5:1 bis 1,2:1. Die Anzahl der kleineren Teilchen im Verhältnis zu den größeren Teilchen kann ganz grob abgeschätzt bei etwa 1000:1 bis 20:1, vorzugsweise bei etwa 200:1 bis 40:1 liegen.

Die größeren Teilchen sind in der Beschichtung von einer dünnen Schicht der kleineren Teilchen überzogen, so dass sie auf ihrer "Außenhaut" bzw. Hülle ebenfalls Poren besitzen; dabei ragen sie jedoch aus der Schicht heraus, die von den kleineren Teilchen auf dem Substrat gebildet wird. Sie werden in einer Menge eingesetzt, die bewirkt, dass ihr Abstand zueinander hauptsächlich im Bereich von 20 bis 200 nm liegt, gemessen von Kegel zu Kegel der Teilchen. Dadurch entsteht eine Beschichtung mit drei verschiedenen Porengrößen an ihrer Oberfläche (unter Poren werden hier nach oben offene Zwischenräume im Material bezeichnet): Die erste Porengröße wird durch die Abstände der größeren Teilchen zueinander bestimmt, die zweite durch die Abstände der kleineren Teilchen zueinander, und die dritte durch die Poren in den kleineren Partikeln.

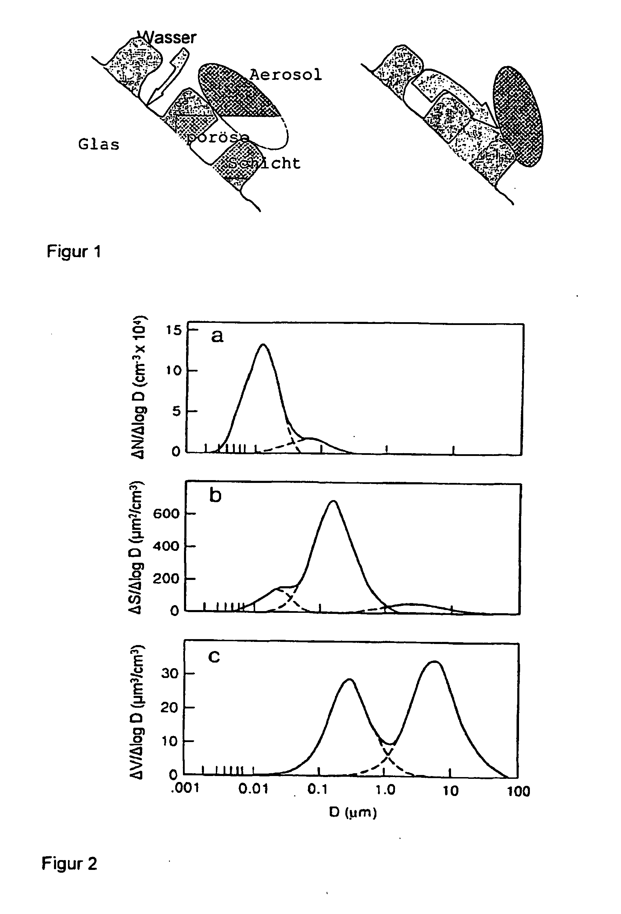

Diese Oberflächen lassen einen Wassertropfen spreiten und weisen einen kleinen Kontaktwinkel auf. Die Eigenschaft entsteht durch eine Kapillarwirkung der porösen Schicht. Das Wasser dringt in die Poren ein und sorgt so für einen kleinen Kontaktwinkel an der äußeren, sichtbaren Grenzfläche. Die beobachtete Hydrophilie solcher Schichten unterscheidet sich damit grundsätzlich von derjenigen von photokatalytischen TiO₂-Schichten, die chemischer Natur ist. Die erfindungsgemäße, poröse Schicht weist im Unterschied zu anderen hydrophilen Schichten eine physikalische Trennwirkung auf. Wasser kann in die Schicht eindringen, ein Aerosolpartikel nicht. Es bleibt auf der Oberfläche liegen. Ist die Wassermenge ausreichend, wird ein auf der porösen Oberfläche liegendes Partikel unterspült und weggetragen. Auf diese Weise können auch hydrophobe Aerosole entfernt werden, die sich nicht von Wasser benetzen lassen, weil Wasser auf Grund seiner hohen Oberflächenenergie praktisch jeden physisorbierten Stoff verdrängt. Entscheidend ist, dass das Wasser möglichst ungehindert unter die Adhäsionsfläche eines anhaftenden Schmutzpartikels gelangen kann (siehe **Fig. 1**).

Dazu und zur Reduzierung des Festkörperkontakts ist die Adhäsionsfläche zwischen Aerosolpartikel und Beschichtungsoberfläche aufgrund der erfindungsgemäß vorgesehenen Poren und einer darauf beruhenden, gewissen Rauhigkeit deutlich verkleinert gegenüber Schichten des Standes der Technik. Die Partikel der zweiten, größeren Fraktion besitzen eine Durchmesserverteilung mit Schwerpunkt im Bereich von ca. 80 nm bis 300 nm und sind in der Regel annähernd oder vollständig globular. Das Maximum der Porendurchmesser-Größenverteilung der kleineren Partikel, mit denen sie überzogen sind, liegt vorzugsweise unter 6 nm. Die Poren sind damit so klein, dass nur Gase und Flüssigkeiten, nicht aber feste Aerosolpartikel in die Poren eindringen können. **Fig. 2** zeigt eine typische Größenverteilung von urbanem Aerosol. Hierbei ist die Anzahldichteverteilung in der Form dN(r)/dlog(r) gegen den Logarithmus des Partikelradius r aufgetragen und analog für die Oberflächen- bzw. Volumenverteilung die Größen dS/dlog(r) und dV/dlog(r). Dabei bedeutet a: Anzahlspektrum, b: Oberflächenspektrum, c: Volumenspektrum.

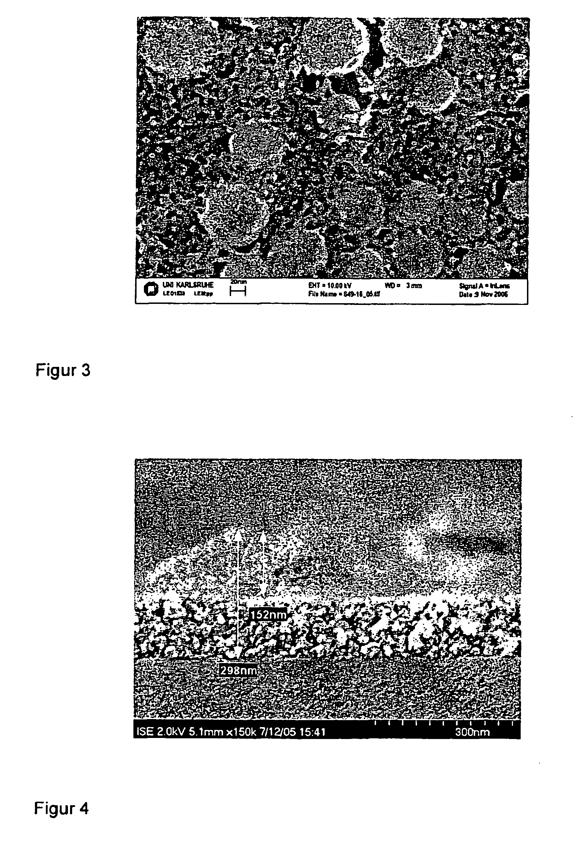

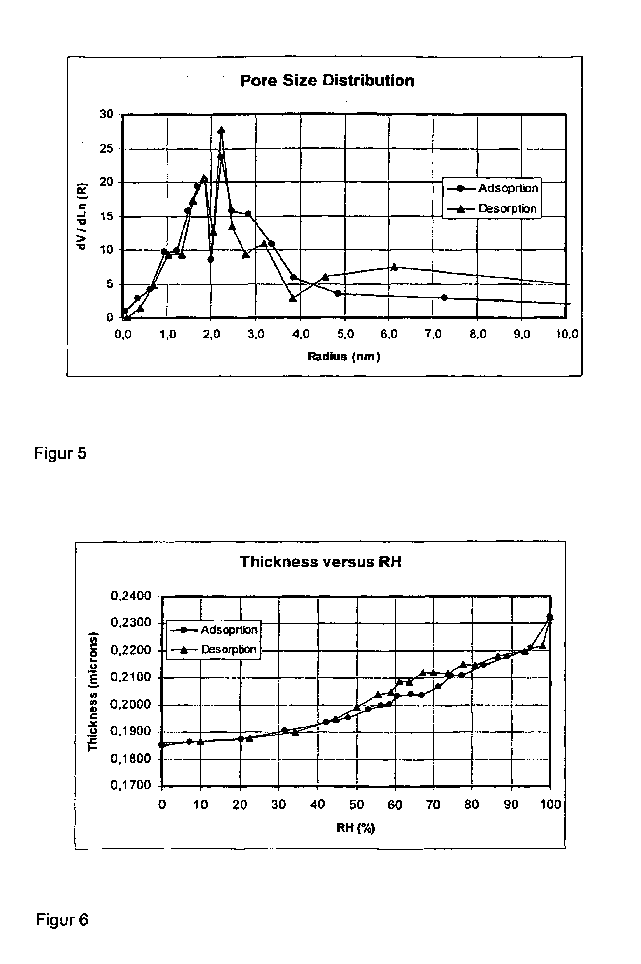

Die poröse Oberfläche der erfindungsgemäßen Schicht ist auf die Partikelgrößenverteilung des Ultrafeinstaubs (Durchmesser 10 nm) abgestimmt und zeigt ihm gegenüber eine entsprechend geringe Adhäsionsfläche. Partikel, die sich aus der Gasphase durch Nukleation neu bilden, weisen eine typische Größe zwischen 10 nm und 60 nm auf, wobei für Nanopartikel < 10 nm eine flüssige Form vermutet wird. Die Diffusionsrate des Ultrafeinstaubs ist hoch, daher koaguliert er zwar nach einer kurzen Verweilzeit zu größeren Partikeln. Der Ultrafeinstaub führt jedoch wegen seiner hohen Teilchenzahl in Verbindung mit einer hohen Diffusionrate auch zur Primärverschmutzung der zu schützenden Glasoberfläche. Deshalb ist die gesamte Oberfläche der erfindungsgemäßen Schutzschicht auf Glas mit dem beschriebenen, nanoskaligen Gefüge ausgerüstet. **Figur 5** zeigt von einer solchen Schicht die Porenradienverteilung mit einem Maximum bei 2 nm, gemessen mit einem Elipsometer. Die Porenradienverteilung ist breit und zeigt, dass auch größere Poren vorhanden sind. Neben der nanoskaligen, porösen Grundstruktur enthält die Schicht nämlich eine Sekundärstruktur, die größere Poren vor allem im Bereich von 5-20 nm aufweist und die der Abwehr von Partikeln im mittleren Größenbereich um 300nm dient. Diese Porenstruktur ist durch Aufnahmen am Rasterelektronenmikroskop belegt und gut zu erkennen. Sie wird durch die Abstände zwischen den kleineren Partikeln realisiert (**Figuren 3 und 4**).

Auf den REM-Bildern ist neben der Porenstruktur eine weitere Struktureinheit erkennbar, die noch deutlich größer ist. Hierbei handelt es sich um die bis zu 300 nm großen Partikel der zweiten Fraktion, die der erfindungsgemäßen Schicht eine Reliefstruktur verleihen, mit einem irregulären Abstand der einzelnen Kegel im Bereich von etwa 20 nm bis 200 nm. Die Nanokegel sind an einer Bruchkante besonders gut zu erkennen (**Figur 4**).

Die Reliefstruktur bewirkt, dass bei hoher Luftfeuchte ein bis zu 50 nm dicker Wasserfilm auf der Oberfläche der Schicht kondensiert, der ein Anhaften von Schmutzpartikeln erschwert. Die Ausbildung des Wasserfilms ist durch die ellipsometrische Bestimmung der Schichtdicke in Abhängigkeit von der relativen Feuchte (RH) belegt (siehe **Figur 6**). Diese Figur zeigt die Bestimmung der Gesamtschichtdicke einer porösen Schicht, belegt mit einem Wasserfilm, in Abhängigkeit von der relativen Luftfeuchte, gemessen mit einem Ellipsometer.

Zur Herstellung der gewünschten Reliefstruktur können statt SiO₂-Partikeln wie erwähnt beliebige andere, z.B. Al₂O₃-Partikel oder aggregierte TiO₂-Partikel oder Mischungen daraus verwendet werden. TiO₂-Partikel verleihen der Schicht noch einen zusätzlichen, photokatalytisch wirksamen Reinigungseffekt. Die Partikel müssen nur ausreichend groß sein, damit sie die gewünschte Reliefstruktur bilden können.

Die erfindungsgemäße Schicht weist Staub ab und lässt sich nicht nur von organischem Schmutz wie bei photokatalytischen Schichten leicht reinigen, sondern zudem vom anorganischen Schmutz. Die erfindungsgemäße Schicht bildet wegen ihrer Reliefstruktur aus Nanokegeln bei einer relativen Luftfeuchte von 50 % bis 70 % schon einen ausreichend dicken Wasserfilm aus, der physisorbierte Aerosolpartikel verdrängt. Regen, wie sie eine photokatalytische Schicht stets benötigt, damit die zersetzten organischen Aerosole von der Oberfläche gewaschen werden können, sind für die erfindungsgemäße Schicht nicht zwingend. Die erfindungsgemäße Schicht wird selbstverständlich auch durch Regenfall, der allerdings nur selten auftreten muss und zudem mit Aerosolen stark verschmutzt sein kann, gereinigt. Hier hilft die vorteilhafte Trennwirkung der Schicht. Die erfindungsgemäße Schicht erhöht die Transparenz damit ausgerüsteter Gläser und vermindert sie nicht, wie im Falle von TiO₂, das eine höhere Brechzahl als Glas aufweist. Damit ist sie besonders für die Anwendung in der solaren Energienutzung geeignet.

Die Herstellung des erfindungsgemäßen Beschichtungsmaterials kann mit Hilfe üblicher Verfahren erfolgen, z.B. mit Hilfe der Sol-Gel-Technik. Wie bereits oben erwähnt, sind Teilchen in der Größenordnung der zweiten, größeren Teilchen im Handel erhältlich; sie lassen sich auch auf eine Vielzahl von Methoden leicht herstellen, die aus dem Stand der Technik bekannt sind, beispielsweise mit Hilfe des Stöberprozesses. Die kleineren Teilchen werden mit Hilfe des Sol-Gel-Verfahrens in situ im ersten Lösungsmittel hergestellt; die größeren Teilchen können nach Abschluss oder bereits im Verlauf der hydrolytischen Kondensation der entsprechenden Materialien zugegeben werden. Schließlich wird die erhaltene Mischung mit dem zweiten Lösungsmittel in geeigneter Menge verdünnt.

Das Beschichtungsmaterial kann in dieser Form ggf. gelagert werden; zur Herstellung der erfindungsgemäßen Beschichtung wird es auf das Substrat aufgetragen, beispielsweise aufgesprüht oder mit einer geeigneten Vorrichtung aufgetragen, oder das Substrat wird aus dem Beschichtungsmaterial herausgezogen. Anschließend wird die Schicht bei Raumtemperatur oder erhöhter Temperatur ausreichend lange getrocknet, bis die Lösungsmittel entfernt sind. Um die Haftfestigkeit und die Abriebfestigkeit zu erhöhen, kann die Schicht außerdem bei wesentlich höheren Temperaturen konditioniert werden, z.B. 15 Minuten lang bei 250 bis (vorzugsweise) etwa 550°C. Bei dieser Temperatur werden außerdem Si-C-Bindungen zerstört, sodass im Falle des Vorhandenseins organischer Komponenten in den Teilchen (was allerdings weniger bevorzugt ist) diese beim Konditionieren ebenfalls endgültig entfernt werden.

### Ausführungsbeispiel

213 g Tetramethoxysilan in 1500 g Ethanol werden mit 125 g 0,1 n wässriger Ammoniaklösung hydrolysiert. Dem Hydrolysat werden nach zwei Stunden eine wässrige Dispersion aus 8,4 g TiO₂-Agglomerat (P25, Fa. Degussa) in 1680 g Wasser und 16,4 g wässriges Kieselsol, das 100 nm große Partikel enthält (Levasil 50/50%, Fa. H.C. Starck), zugegeben. Die Mischung wird abschließend mit 5500 g 1-Methoxy-2-propanol verdünnt. Die so erhaltene Beschichtungslösung kann durch Tauchen auf Glasrohre aufgetragen werden.

Zur Konditionierung der Schicht wird das beschichtete Glassubstrat für 15 min einer Temperatur von 550 °C ausgesetzt. Es resultiert eine erfindungsgemäße Beschichtung.

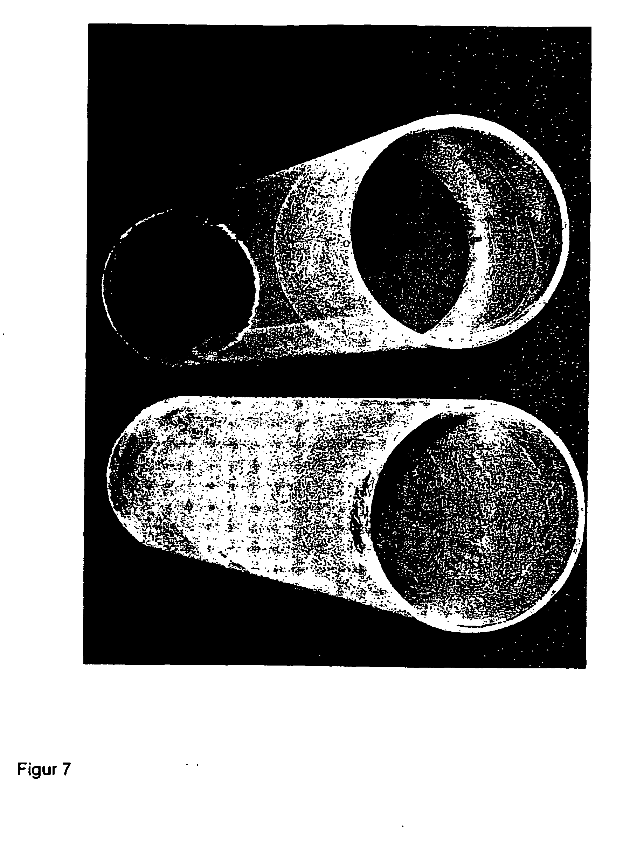

**Figur 7** demonstriert die staubabweisende Wirkung einer erfindungsgemäßen Schicht auf einem Glasrohr bei einer Temperatur von 21 °C und einer relativen Luftfeuchte von 50 % im Vergleich zu einem unbeschichteten Glasrohr. Das unbeschichtete Referenzglasrohr ist links zu sehen, das rechte Glasrohr ist mit Ausnahme seines vorderen Randes mit der erfindungsgemäßen Beschichtung versehen.

## Patentansprüche

1. Beschichtungsmaterial, enthaltend
(a) erste, durch hydrolytische Kondensation gebildete oxidische Teilchen in einem Größenbereich von 5-20 nm,
(b) zweite Teilchen mit einem Durchmesser im Größenbereich von 80-300 nm,
(c) ein erstes, wasserhaltiges Lösungsmittel, in welchem das Ausgangsmaterial für die durch hydrolytische Kondensation gebildeten oxidischen Teilchen löslich ist und welches dessen Hydrolyse und Kondensation zulässt oder fördert, wobei die ersten, durch hydrolytische Kondensation gebildeten oxidischen Teilchen mit Hilfe des Sol-Gel-Verfahrens in situ im ersten Lösungsmittel hergestellt sind, und
(d) mindestens ein zweites Lösungsmittel, ausgewählt unter Alkoholen, Ethern, organischen Säuren, Estern, Ketonen, Aminen und Säureamiden der Formeln
ROH
ROR¹,
RCOOH
RCOOR¹
RC(O)R¹
und
RCONR²₂,
und Mischungen hiervon, worin R und R¹ ggf. gleich oder verschieden sind und unsubstituiertes oder mit Hydroxy, -NHR², Amido, Imino, -COOR² und/oder Alkoxycarbonyl substituiertes, gesättigtes oder ungesättigtes, geradkettiges oder verzweigtes Alkyl, Alkoxy oder Polyetheralkoxy bedeutet, oder worin R und R¹ unter Ausbildung einer unsubstituierten oder mit Hydroxy, -NHR², Amido, Imino, -COOR² und/oder Alkoxycarbonyl substituierten oder ungesättigten, geradkettigen oder verzweigten Alkylen-, Oxyalkylen- oder Alkylen(poly)oxyalkylengruppe unter Ringbildung miteinander verknüpft sind, mit der Maßgabe, dass R kein unsubstituiertes Alkyl ist, wenn das Lösungsmittel unter die Formel ROH fällt, und worin R² ggf. gleich oder verschieden ist und H oder C₁- bis C₆-Alkyl bedeutet.

2. Beschichtungsmaterial nach Anspruch 1, worin die ersten, durch hydrolytische Kondensation erhaltenen Teilchen aus hydrolysierbaren und kondensierbaren Silanen und/oder aus Hydroxiden und/oder Alkoxiden von zwei-, drei-, vier- oder fünfwertigen Ionen der Hauptgruppen des Periodensystems und der Übergangsmetalle erhalten wurden.

3. Beschichtungsmaterial nach einem der voranstehenden Ansprüche, worin die ersten Teilchen Poren mit einem Maximum der Porendurchmesser-Verteilung von unter 6 nm, vorzugsweise im Bereich von 1,5 bis 4 nm, aufweisen.

4. Beschichtungsmaterial nach einem der voranstehenden Ansprüche, worin die zweiten Teilchen oxidische Teilchen sind und aus einem reinen oder gemischten Oxid oder aus einer Mischung von Teilchen aus einem reinen Oxid bestehen, wobei das oder die Oxide vorzugsweise ausgewählt sind unter Al₂O₃, SiO₂ und TiO₂.

5. Beschichtungsmaterial nach einem der voranstehenden Ansprüche, worin die zweiten Teilchen im wesentlichen sphärisch sind und/oder einen durchschnittlichen Durchmesser von 100 bis 150 nm, vorzugsweise im Bereich von 100 nm, aufweisen.

6. Mit einer Beschichtung versehenes Substrat, wobei die Beschichtung aus mindestens zwei Partikel-Fraktionen aufgebaut ist, wobei die Partikel der ersten Fraktion oxidische Partikel sind, die einen Durchmesser im Größenbereich von 5-20 nm aufweisen, und die Partikel der zweiten Fraktion einen Durchmesser im Größenbereich von 80-300 nm aufweisen, wobei die Partikel der zweiten Fraktion einen durchschnittlichen Abstand, von Kegel zu Kegel dieser Partikel gemessen, von durchschnittlich 20-200 nm zueinander haben, und wobei die Partikel der ersten Partikel-Fraktion Poren mit einer Porenradiusverteilung aufweisen, deren Maximum zwischen 1 und 6 nm liegt, ermittelt mit Hilfe der ellipsometrischen Porosimetrie.

7. Mit einer Beschichtung versehenes Substrat nach Anspruch 6, worin die Partikel der ersten Partikel-Fraktion unter Oxiden von zwei-, drei-, vier- oder fünfwertigen Ionen der Hauptgruppen des Periodensystems und der Übergangsmetalle ausgewählt sind.

8. Mit einer Beschichtung versehenes Substrat nach einem der Ansprüche 6 oder 7, worin die Partikel der ersten Fraktion zumindest an der Oberfläche der Beschichtung einen durchschnittlichen Abstand von 5-20 nm zueinander besitzen.

9. Mit einer Beschichtung versehenes Substrat nach einem der Ansprüche 6 bis 8, hergestellt aus einem Beschichtungsmaterial gemäß einem der Ansprüche 1 bis 5.

10. Mit einer Beschichtung versehenes Substrat nach einem der Ansprüche 6 bis 9, worin das Substrat ein Glas ist, vorzugsweise ein Flachglas oder ein Rohrglas, und ganz besonders bevorzugt ein Flachglas zum Abdecken von Photovoltaikmodulen oder Warmwasserkollektoren oder ein Rohrglas für solare Warmwasserbereitung.

11. Verfahren zur Herstellung des Beschichtungsmaterials nach einem der Ansprüche 1 bis 5, **gekennzeichnet durch** die folgenden Schritte:
(i) Bereitstellen mindestens einer Verbindung, ausgewählt unter hydrolysierbaren und kondensierbaren Silanen und/oder Hydroxiden und/oder Alkoxiden von zwei-, drei-, vier- oder fünfwertigen Ionen der Hauptgruppen des Periodensystems und der Übergangsmetalle,
(ii) Lösen der Verbindung(en) gemäß (i) in dem ersten Lösungsmittel gemäß (c) wie in Anspruch 1 definiert, derart, dass diese Verbindung(en) einer hydrolytischen Kondensation unterliegen,
(iii) Hinzufügen von zweiten Teilchen, die einen Durchmesser im Größenbereich von 80-300 nm aufweisen, in das Lösungsmittel gemäß (c) wie in Anspruch 1 definiert, und zwar während oder nach der hydrolytischen Kondensation gemäß (ii),
(iv) Hinzufügen des zweiten Lösungsmittels gemäß (d) wie in Anspruch 1 definiert, und zwar während oder nach der hydrolytischen Kondensation gemäß (ii) und vor oder mit oder nach der Zugabe der zweiten Teilchen.

12. Verfahren zur Herstellung des beschichteten Substrats nach einem der Ansprüche 6 bis 10, **gekennzeichnet durch** die folgenden Schritte:
(i) Aufbringen eines Beschichtungsmaterials, wie in einem der Ansprüche 1 bis 5 definiert, auf einem Substrat,
(ii) Trocknen/Konditionieren des Beschichtungsmaterials bei einer Temperatur zwischen Raumtemperatur und etwa 600°C.

13. Verfahren nach Anspruch 12, worin das Beschichtungsmaterial für ca. 5 bis 40 min. bei etwa 550°C getrocknet und konditioniert wird.

14. Verwendung des Beschichtungsmaterials nach einem der Ansprüche 1 bis 5 zum Beschichten eines Substrats mit einer Beschichtung, die staub- und aerosolabweisend ist und mit Regenwasser von anhaftendem anorganischem und organischem Schmutz gereinigt werden kann.

15. Verwendung nach Anspruch 14, worin das Substrat ein Glas, vorzugsweise ein Flachglas oder ein Rohrglas, und ganz besonders bevorzugt ein Flachglas zum Abdecken von Photovoltaikmodulen oder Warmwasserkollektoren oder ein Rohrglas für solare Warmwasserbereitung ist.

## Claims

1. Coating material comprising:
(a) first oxidic particles formed by hydrolytic condensation in a size range of 5-20 nm,
(b) second particles of a diameter in a size range of 80-300 nm,
(c) a first water-containing solvent in which the starting material for the oxidic particles formed by hydrolytic condensation is soluble and which enables or enhances its hydrolysis and condensation, wherein the first oxidic particles formed by hydrolytic condensation are produced by means of the sol-gel method in situ in the first solvent, and
(d) at least one second solvent, selected from alcohols, ethers, organic acids, esters, ketones, amines, and acid amides, of the formulas
ROH,
ROR¹,
RCOOH,
RCOOR¹,
RC(O)R¹,
RCONR²₂,
and mixtures thereof, wherein R and R¹ are optionally the same or different and have the meaning of unsubstituted or hydroxy, -NHR², amido, imino, - COOR², and/or alkoxycarbonyl substituted, saturated or unsaturated, straight-chain or branched alkyl, alkoxy or polyether alkoxy; or wherein R and R¹ are linked with one another by forming a ring with formation of an unsubstituted or hydroxy, -NHR², amido, imino, -COOR², and/or alkoxycarbonyl substituted or unsaturated, straight-chain or branched alkylene, oxyalkylene or alkylene (poly)oxyalkylene group; with the proviso that R is not an unsubstituted alkyl when the solvent is of the formula ROH, and wherein R² optionally may be the same or different and is H or C₁ to C₆ alkyl.

2. Coating material according to claim 1, wherein the first particles obtained by hydrolytic condensation have been obtained from hydrolyzable and condensable silanes and/or from hydroxides and/or alkoxides of two-, three-, four-, or five-valent ions of the main groups of the periodic table and the transition metals.

3. Coating material according to one of preceding claims, wherein the first particles have pores with a maximum of a pore diameter distribution of below 6 nm, preferably in the range of 1.5 to 4 nm.

4. Coating material according to one of the preceding claims, wherein the second particles are oxidic particles and are comprised of a pure or mixed oxide or of a mixture of particles of a pure oxide wherein the oxide or oxides are preferably selected from Al₂O₃, SiO₂ and TiO₂.

5. Coating material according to one of the preceding claims, wherein the second particles are substantially spherical and/or have an average diameter of 100 to 150 nm, preferably in the range of 100 nm.

6. Substrate provided with a coating, wherein the coating is comprised of at least two particle fractions, wherein the particles of the first fraction are oxidic particles having a diameter in a size range of 5-20 nm and the particles of the second fraction have a diameter in a size range of 80-300 nm, wherein the particles of the second fraction have an average spacing relative to one another, measured from cone to cone of these particles, of 20-200 nm on average, and wherein the particles of the first particle fraction have pores with a pore radius distribution whose maximum is between 1 and 6 nm, determined by means of ellipsometric porosimetry.

7. Substrate provided with a coating according to claim 6, wherein the particles of the first particle fraction are selected from oxides of two-, three-, four- or five-valent ions of the main groups of the periodic table and the transition metals.

8. Substrate provided with a coating according to one of claims 6 or 7, wherein the particles of the first fraction, at least on the surface of the coating, have an average spacing of 5-20 nm relative to one another.

9. Substrate provided with a coating according to one of claims 6 to 8, produced of a coating material according to one of claims 1 to 5.

10. Substrate provided with a coating according to one of claims 6 to 9, wherein the substrate is a glass, preferably plate glass or tubular glass, and especially preferred a plate glass for covering photovoltaic panels or water heating collectors or a tubular glass for solar water heating.

11. Method for producing the coating material according to one of claims 1 to 5, **characterized by** the following steps:
(i) providing at least one compound, selected from hydrolyzable and condensable silanes and/or hydroxides and/or alkoxides of two-, three-, four-, or five-valent ions of the main groups of the periodic table and the transition metals,
(ii) dissolving the compound(s) according to (i) in the first solvent according to (c) as defined in claim 1, such that these compound(s) are subjected to hydrolytic condensation,
(iii) adding second particles that have a diameter in the size range of 80-300 nm, into the solvent according to (c) as defined in claim 1, namely during or after the hydrolytic condensation according to (ii),
(iv) adding the second solvent according to (d) as defined in claim 1, namely during or after hydrolytic condensation according to (ii) and before or together with or after adding the second particles.

12. Method for producing the coated substrate according to one of claims 6 to 10, **characterized by** the following steps:
(i) applying a coating material, as defined in one of claims 1 to 5, onto a substrate,
(ii) drying/conditioning the coating material at a temperature between room temperature and approximately 600 °C.

13. Method according to claim 12, wherein the coating material is dried and conditioned for approximately 5 to 40 min. at approximately 550°C.

14. Use of the coating material according to one of claims 1 to 5 for coating a substrate with a coating that is dust-repellent and aerosol-repellent and is cleanable by rain washing off adhering inorganic and organic dirt.

15. Use according to claim 14, wherein the substrate is a glass, preferably a plate glass or a tubular glass, and particularly preferred a plate glass for covering photovoltaic panels or water heating collectors or a tubular glass for solar water heating.

## Revendications

1. Matériau de revêtement, contenant
(a) de premières particules oxydées formées par condensation hydrolytique, comprises dans une plage de dimensions allant de 5 à 20 nm,
(b) de secondes particules ayant un diamètre situé dans la plage de dimensions allant de 80 à 300 nm,
(c) un premier solvant aqueux, dans lequel le matériau de départ pour les particules oxydées formées par condensation hydrolytique est soluble et qui permet ou favorise l'hydrolyse et la condensation de celui-ci, dans lequel les premières particules oxydées, formées par condensation hydrolytique, ont été produites in situ dans le premier solvant par le procédé sol-gel, et
(d) au moins un deuxième solvant, choisi parmi des alcools, des éthers, des acides organiques, des esters, des cétones, des amines et des amines d'acides des formules
ROH,
ROR¹,
RCOOH,
RCOOR¹,
RC(O)R¹
et
RCONR²₂,
et des mélanges de ces substances, dans lesquelles R et R¹ sont éventuellement identiques ou différents et signifient un alkyle, un alcoxy ou un polyétheralcoxy à chaîne droite ou ramifié, saturé ou insaturé, non substitué ou substitué avec hydroxy, - NHR², amido, imino, -COOR² et/ou alcoxycarbonyle, ou dans lesquelles R et R¹ sont liés l'un à l'autre en formant un anneau avec formation d'un groupe alkylène, oxyalkylène ou alkylène(poly)oxyalkylène à chaîne droite ou ramifié, non substitué ou substitué avec hydroxy, -NHR², amido, imino, -COOR² et/ou alcoxycarbonyle ou insaturé, avec la condition que R n'est pas un alkyle non substitué, lorsque le solvant répond à la formule ROH, et dans lesquelles R² est éventuellement identique ou différent et signifie un H ou un alkyle C₁-C₆.

2. Matériau de revêtement selon la revendication 1, dans lequel les premières particules obtenues par condensation hydrolytique ont été obtenues à partir de silanes hydrolysables et condensables et/ou à partir d'hydroxydes et/ou d'alcoxydes d'ions bi-, tri-, tétra- ou pentavalents des groupes principaux du système périodique et des métaux de transition.

3. Matériau de revêtement selon l'une quelconque des revendications précédentes, dans lequel les premières particules présentent des pores ayant une répartition du diamètre des pores dont le maximum est inférieur à 6 nm, et se situe de préférence dans la plage allant de 1,5 à 4 nm.

4. Matériau de revêtement selon l'une quelconque des revendications précédentes, dans lequel les secondes particules sont des particules oxydées et se composent d'un oxyde pur ou mélangé ou d'un mélange de particules d'un oxyde pur, dans lequel le ou les oxyde(s) est/sont choisi(s) de préférence parmi Al₂O₃, SiO₂ et TiO₂.

5. Matériau de revêtement selon l'une quelconque des revendications précédentes, dans lequel les secondes particules sont essentiellement sphériques et/ou présentent un diamètre moyen de 100 à 150 nm, de préférence dans la plage de 100 nm.

6. Substrat pourvu d'un revêtement, dans lequel le revêtement est composé d'au moins deux fractions de particules, dans lequel les particules de la première fraction sont des particules oxydées, qui présentent un diamètre compris dans la plage de dimensions allant de 5 à 20 nm, et les particules de la seconde fraction présentent un diamètre compris dans la plage de dimensions allant de 80 à 300 nm, dans lequel les particules de la seconde fraction présentent une distance moyenne entre elles de 20 à 200 nm, mesurée de cône à cône de ces particules, et dans lequel les particules de la première fraction de particules présentent des pores ayant une répartition des rayons des pores, dont le maximum se situe entre 1 et 6 nm, déterminé à l'aide de la porosimétrie ellipsométrique.

7. Substrat pourvu d'un revêtement selon la revendication 6, dans lequel les particules de la première fraction de particules sont choisies parmi des oxydes d'ions bi-, tri-, tétra- ou pentavalents des groupes principaux du système périodique et des métaux de transition.

8. Substrat pourvu d'un revêtement selon l'une quelconque des revendications 6 ou 7, dans lequel les particules de la première fraction présentent, au moins à la surface du revêtement, une distance moyenne entre elles de 5 à 20 nm.

9. Substrat pourvu d'un revêtement selon l'une quelconque des revendications 6 à 8, fabriqué à partir d'un matériau de revêtement selon l'une quelconque des revendications 1 à 5.

10. Substrat pourvu d'un revêtement selon l'une quelconque des revendications 6 à 9, dans lequel le substrat est un verre, de préférence un verre plat ou un verre tubulaire, et de préférence encore un verre plat convenant pour recouvrir des modules photovoltaïques ou des collecteurs d'eau chaude ou un verre tubulaire convenant pour la production d'eau chaude solaire.

11. Procédé de fabrication du matériau de revêtement selon l'une quelconque des revendications 1 à 5, **caractérisé par** les étapes suivantes:
(i) Préparation d'au moins un composé, choisi parmi des silanes et/ou hydroxydes et/ou alcoxydes hydrolysables et condensables d'ions bi-, tri-, tétra- ou pentavalents des groupes principaux du système périodique et des métaux de transition,
(ii) Dissolution du/des composé(s) selon (i) dans le premier solvant selon (c) défini dans la revendication 1, de telle manière que ce/ces composés subisse(nt) une condensation hydrolytique,
(iii) Ajout de secondes particules, qui présentent un diamètre compris dans la plage de dimensions allant de 80 à 300 nm, dans le solvant selon (c) défini dans la revendication 1, notamment pendant ou après la condensation hydrolytique selon (ii),
(iv) Ajout du deuxième solvant selon (d) défini dans la revendication 1, notamment pendant ou après la condensation hydrolytique selon (ii) et avant ou avec ou après l'ajout des secondes particules.

12. Procédé de fabrication du substrat revêtu selon l'une quelconque des revendications 6 à 10, **caractérisé par** les étapes suivantes:
(i) Dépôt d'un matériau de revêtement, tel qu'il est défini dans l'une quelconque des revendications 1 à 5, sur un substrat,
(ii) Séchage/conditionnement du matériau de revêtement à une température comprise entre la température ambiante et environ 600°C.

13. Procédé selon la revendication 12, dans lequel on sèche et on conditionne le matériau de revêtement pendant environ 5 à 40 minutes à environ 550°C.

14. Utilisation du matériau de revêtement selon l'une quelconque des revendications 1 à 5 pour revêtir un substrat avec un revêtement, qui repousse la poussière et les aérosols et qui peut être lavé par l'eau de pluie des saletés inorganiques et organiques adhérentes.

15. Utilisation selon la revendication 14, dans laquelle le substrat est un verre, de préférence un verre plat ou un verre tubulaire, et de préférence encore un verre plat, convenant pour recouvrir des modules photovoltaïques ou des collecteurs d'eau chaude ou un verre tubulaire convenant pour produire de l'eau chaude solaire.
